# EUROPÄISCHE PATENTSCHRIFT

(11) **EP 3 045 651 B1**
(45) Veröffentlichungstag und Bekanntmachung des Hinweises auf die Patenterteilung: **01.02.2017**
(21) Anmeldenummer: 15020250.5
(22) Anmeldetag: 17.12.2015
(51) Int. Cl.: E06B 9/302, E06B 9/327, E06B 9/38, E06B 9/386, E06B 9/388

(54) **RAFFSTORE**
LAMELLAR BLIND
STORE À LAMELLES

(30) Priorität: 02.01.2015 DE 102015000170
(43) Veröffentlichungstag der Anmeldung: 20.07.2016
(73) Patentinhaber: ROMA KG, 89331 Burgau (DE); D&M Rolladentechnik, 56204 Hillscheid (DE)
(72) Erfinder: Maier, Wilfried, 89189 Neenstetten (DE); Krause, Dieter, 56203 Höhr-Grenzhausen (DE)
(74) Vertreter: Munk, Ludwig Hubert

(56) Entgegenhaltungen:
- DE-A1- 2 409 987
- DE-A1- 2 501 147
- DE-A1- 2 608 271
- DE-U1- 29 613 220

## Beschreibung

Die Erfindung betrifft einen Raffstore gemäß dem Oberbegriff des Anspruchs 1.

Ein Raffstore der gattungsgemäßen Art weist einen vor der Gebäudeöffnung aufzieh- und ablassbarer Behang auf, welcher üblicherweise gelochte Behanglamellen hat, die von einer Anzahl Aufzugsbänder durchgriffen werden, welche wiederum an einer unteren Behangendleiste angreifen, um den Behang aufziehen oder ablassen zu können. Zur Seitenführung des Raffstorebehangs sind dabei zu beiden Seiten des Behangs Führungsschienen vorgesehen, wobei an beiden Schmalseiten der Endleiste und zumindest eines Teils der Behanglamellen jeweils ein nach außen abstehender, in eine Führungsnut der zugeordneten Führungsschiene hineinragender Führungskörper befestigt ist. Ferner sind zum Jalousieren der abgelassenen Behanglamellen zwischen einer Belichtungsstellung und einer Verschattungsstellung an den Längsseiten der Lamellen angreifende Wendebänder vorgesehen. Dabei stellt sich das Problem, dass der Raffstore die Gebäudeöffnung nicht so stark abschattet wie lichtanfällige Personen für einen erholsamen Schlaf nach Sonnenaufgang benötigen.

Um bei einem Raffstore dieser Art eine bessere Verschattung der Gebäudeöffnung zu erreichen, ist gemäß dem deutschen Gebrauchsmuster DE 296 13 220 U1 bereits vorgeschlagen worden, die an dem Lamellenprofil der Behanglamelle als Durchgriff für die Aufzugbänder vorgesehene Anzahl Lochungen, und die zum Führen der Behanglamelle in seitlichen Führungsschienen dienenden, von der Lamellenquerseite abstehenden Führungsbolzen mit einem geringeren Abstand in Lamellenquerrichtung zu einer der Längsseiten des Lamellenprofils am Lamellenprofil anzubringen als zu der anderen Längsseite.

Dadurch kommen die aneinander angrenzenden Behanglamellen im Verschattungszustand direkt aufeinander zu liegen, weil die Aufzugsbänder vollständig hinter der geschlossenen Lamellenfront durch die Lamellenprofile geführt sind, so dass Lichtspalte zwischen benachbarten Behanglamellen vermieden oder zumindest verringert werden können.

In der deutschen Patent DE 10 2009 021 473 B3 ist ferner eine Anschlagsanordnung mit einem unten an jeder Führungsschiene angebrachten Anschlag vorgeschlagen worden, wobei dem Anschlag jeweils ein Gegenanschlag an dem Führungsbolzen der Behangendleiste zugeordnet ist. Der Anschlag ist dabei als schiefe Ebene ausgebildet und der Gegenanschlag als nach unten ragender Dorn, der als Umwerfer für die Behangendleiste dient und beim Absenken des Behangs auf die schiefe Ebene auffährt, um dadurch ein Zuschwenkmoment auf die Endleiste auszuüben, um diese in die vollständig geschlossene Stellung zu verschwenken.

Dadurch wurde eine Verbesserung im Sinne eines kleineren Lichtspalts zwischen Endleiste und nächstoberer Behanglamelle erzielt.

Die deutsche Patentanmeldung DE 26 51 873 A1 zeigt einen Raffstore mit Führungsschienen, die einen Schenkel aufweisen, der in eine Ausnehmung am Rand der Behanglamellen hineinragt, so dass sich eine Überdeckung zwischen den Lamellen und den Führungsleisten in den Seitenwandbereichen der Jalousie ergibt und dadurch seitlicher Lichteinfall verhindert wird. Dabei erscheint fraglich, ob das Auffädeln der Behanglamellen beim Ablassen des aufgezogenen Behangs auf die Schenkel der Führungsschienen zuverlässig klappt.

Die deutsche Patentanmeldung DE 250 11 47 A1 zeigt schließlich eine Seitenführungsschiene eines Raffstores, die in Behangquerrichtung nach innen ragenden Lichtbrechrippen aufweist, welche dort für eine Lichtabschirmung sorgen sollen.

Hiervon ausgehend liegt der Erfindung daher die Aufgabe zu Grunde, einen Raffstore mit weiter verbesserter Verdunklung zu schaffen.

Diese Aufgabe wird mit den Merkmalen des Anspruchs 1 gelöst.

Im Sinne einer weiter verbesserten Abschattung bzw. Lichtdichtigkeit des Raffstores weisen die beiden zu beiden Seiten des Behangs angeordneten Führungsschienen erfindungsgemäß jeweils eine vorteilhaft L-förmige Querschnittsform auf und stehen mit einem auf der dem Gebäudeinneren zugewandten Seite der Behanglamellen angeordneten L-Schenkel in Lamellenlängsrichtung nach innen über die Querseiten der Behanglamellen bzw. der Lamellenprofile über. Es wären im Rahmen der Erfindung selbstverständlich auch andere Querschnittsformen für die Führungsschienen denkbar, beispielsweise ein dem Behang zugewandtes, offenes U, solange der Schenkel an der Gebäudeinnenseite über die Behanglamellen übersteht. Wenn sich der überstehende Schenkel der Führungsschiene jedoch nur auf der dem Gebäudeinneren zugewandten Seite des Behangs befindet, ergibt sich eine aus Architektensicht gewünschte, verbesserte optische Anmutung der Gebäudefassade. Die Lichtdichtigkeit an den beiden Seiten des Behangs ist dabei durch eine außermittige Bolzung der Behanglamellen verbessert, wobei sich die Führungskörper bzw. Führungsbolzen auf der den überstehenden L-Schenkeln der Führungsschiene zugewandten Seite der Behanglamelle befinden. Dadurch kann der geschlossene Behang nahe der überstehenden L-Schenkel angeordnet werden, so dass die Breite des Spalts, durch den Licht eindringen kann, minimiert wird. Dies ergibt für das seitlich am Behang vorbei eindringende Licht eine Lichtfalle, die das Einfallen direkter Sonnenstrahlen verhindert, und dort nur noch wenig, diffuses Licht eindringen lässt.

Die untere Endleiste ist dabei über die Aufzugsbänder an die Wickelwelle des Raffstores angebunden ist, wobei die Behanglamellen zwar über die Aufzugsbänder, also letztlich über die Endleiste aufgezogen werden, jedoch bei abgelassenem Behang über die Wendebänder an der Wickelwelle befestigt sind. Die Endleiste ist dabei vorteilhaft schwerer als eine der Behanglamellen, um den Behang auf Spannung zu halten.

Vorteilhaft ist es dabei, wenn die Endleiste in zumindest einer der beiden Führungsschienen unverschwenkbar geführt ist. Unverschwenkbar heißt in diesem Zusammenhang lediglich in einem Maß verschwenkbar, welches durch Fertigungstoleranzen bedingt ist, die grundsätzliche Funktionen der Sicherung der Endleiste gegen Verschwenken aber gewährleistet, also nicht unbedingt zwingend absolut unverschwenkbar.

Dazu kann der in dieser Führungsschiene geführte Führungskörper der Endleiste einen in Führungsnutrichtung längs erstreckten Führungskopf aufweisen, der in der Führungsnut aufgenommen ist und durch seine Längserstreckung ein Verschwenken der Endleiste verhindert. Längs erstreckt heißt in diesem Zusammenhang, dass der Führungskopf in Führungsnutrichtung länger als in Normalrichtung zum Behang breit ist, vorzugsweise mehr als doppelt so lang. Alternativ dazu kann der in dieser Führungsschiene geführte Führungskörper der Endleiste auch zwei in der zugeordneten Führungsnut aufgenommene, in Führungsnutrichtung weit beabstandete Führungsköpfe aufweisen, was den selben Effekt hat. Natürlich sind vorteilhaft zu beiden Seiten des Behangs gleiche Führungskörper an der Endleiste befestigt, die, wie vorstehend beschrieben, ausgebildet sind.

Da die Endleiste über ihre Führungsköpfe in den beiden zugeordneten Führungsnuten gegen ein Verschwenken, aber auch gegen einen Windversatz in Querrichtung zum Behang gesichert sein sollen, ist es vorteilhaft, wenn die in den zugeordneten Führungsnuten aufgenommenen Führungsköpfe der beiden an der Endleiste befestigten Führungskörper mit relativ kleinem Abstand zu den Seitenflanken der beiden Führungsnuten angeordnet sind. Bevorzugt liegen die Führungsköpfe sogar an den Seitenflanken der zugeordneten Führungsnuten an, wobei natürlich ein geringes Spiel vorgesehen sein kann.

Die dabei auftretende Reibung und dadurch verursachte Geräusche können dabei wirksam vermindert werden, wenn die Führungskörper der Endleiste jeweils die beiden in der zugeordneten Führungsnut aufgenommenen, in Führungsnutrichtung beabstandeten Führungsköpfe aufweisen und diese Führungsköpfe jeweils als drehbar an dem Führungskörper aufgenommene Rollen ausgebildet sind, die in der zugeordneten Führungsnut abrollen.

Dabei ist es im Sinne einer noch weiter verbesserten Stabilisierung der Lage der Endleiste außerdem vorteilhaft, wenn die den Führungskörpern der Endleiste zugeordneten Führungsnuten jeweils eine der Endleiste zugewandte, hinterschnittene Öffnung aufweisen, die von dem jeweiligen Führungskörper durchgriffen wird, wobei die Führungskörper dabei überkragende Führungsköpfe aufweisen, die ein Herausziehen aus der zugeordneten, hinterschnittenen Führungsnut verhindern.

Um dem dadurch bei der Montage bzw. Demontage des Behangs auftretenden Problem, die Führungsköpfe der Endleiste in die zugeordneten Führungsnuten einzufädeln, bzw. daraus wieder entnehmen zu können, eine montagefreundliche Lösung zu geben ist es dabei ferner vorteilhaft, wenn die Führungsschienen jeweils ein gebäudebefestigbares Trägerprofil und ein daran abnehmbar befestigtes Führungsnutprofil mit der zur Führung der Endleiste dienenden Führungsnut aufweisen. Bei der Montage bzw. Demontage des Behangs kann dann das Führungsnutprofil einfach vom Trägerprofil abgenommen werden, um die Endleiste mit ihren Führungskörpern in die Führungsnuten der beiden Führungsnutprofile einzufädeln bzw. daraus zu entnehmen.

Schon um den Behang nicht unnötig schwer zu machen, weisen die Behanglamellen keine derartig aufwendig gestalteten Führungskörper auf, sondern lediglich einfache, an den Querseiten der Lamellenprofile befestigte Führungsbolzen mit oder ohne einem überkragenden Führungskopf. Die solcherart gestalteten Führungskörper der Behanglamellen können auch mit wesentlich mehr Spiel in den beiden zugeordneten Führungsnuten geführt werden, welche entsprechend für die Aufgabe, die Behanglamellen zu führen, aus einem entsprechend günstigen Material wie beispielsweise Kunststoff, und/oder mit hohen Fertigungstoleranzen hergestellt werden könnten.

Gemäß einer vorteilhaften Weiterbildung der Erfindung weisen die Führungsschienen daher jeweils eine Führungsnut für die Endleiste einerseits und in Richtung quer zum Behang daneben eine andere Führungsnut für die geführten Behanglamellen andererseits auf, so dass die Endleiste einerseits und die geführten Behanglamellen andererseits jeweils in eigenen Führungsnuten geführt sind. Die Führungsnut für die Behanglamellen kann dabei beispielsweise durch ein als Klippseinsatz realisiertes Kunststoffprofil ausgebildet sein, wobei der Klippseinsatz in eine zugeordnete Öffnung an dem Führungsschienenprofil, d.h. vorteilhaft am Trägerprofil der jeweiligen Führungsschiene eingeklippst sein kann. Es wäre jedoch ebenso denkbar, beide Führungsnuten an dem abnehmbaren Führungsnutprofil vorzusehen oder lediglich eine Flanke der Öffnung für das Klippsprofil, wohingegen die andere Flanke zu dem Trägerprofil ausgebildet sein kann.

Der Versatz der Bolzung der Behanglamellen zu der Bolzung bzw. Anbringung der Führungskörper an der Endleiste entspricht vorteilhaft dem Abstand der Führungsnuten an den jeder der beiden Führungsschienen. Auf diese Weise wird gewährleistet, dass sich die Behanglamellen beim Aufziehen der Endleiste deckungsgleich auf die Endleiste legen und gleichzeitig ermöglicht, dass die Führungskörper der Behanglamellen in die eine, die Führungskörper der Endleiste in die andere Führungsnut der beiden Führungsschienen eingreifen und ein Auf- bzw. Zu-Jalousieren der Behanglamellen über die lediglich an den Behanglamellen und nicht an der Endleiste angreifenden Wendebänder weiterhin möglich bleibt.

Dabei wäre es denkbar, die Endleiste im Bereich ihrer Führungskörper an den Aufzugsbändern aufzuhängen, so dass diese sich neben der Behanglamelle erstrecken und die Behanglamellen nicht durchdringen müssen.

Eine bessere Stabilisierung der Behanglamellen gegen Windlasten wird jedoch erreicht, wenn die Behanglamellen Lochungen aufweisen, durch die die Aufzugsbänder hindurchgeführt sind, insbesondere wenn die Aufzugsbänder als windstabile Stahlseile oder dergleichen ausgebildet sind. In diesem Fall ist es natürlich vorteilhaft, wenn sich die Lochungen auf der Drehachse der Führungskörper der Behanglamellen befinden. D.h. dass die Lamellenprofile vorteilhaft jeweils von einer als Durchgriff für die Anzahl Aufzugbänder dienenden Anzahl Lochungen durchdrungen sind, wobei die Anzahl Aufzugsbänder die Behanglamellen an ihren Lochungen durchgreift und wobei die Lochungen jeder Behanglamelle auf einer gedachten, sich in Lamellenlängsrichtung durch die Bolzenabschnitte der beiden Führungskörper verlaufenden Linie angeordnet sind.

Dadurch, dass die beiden Führungskörper jeder Behanglamelle an dem Lamellenprofil der Behanglamelle mit unterschiedlichem Abstand zu den beiden Längskanten des Lamellenprofils angebracht sind, wird zudem erreicht, dass die die Behanglamellen durchdringenden Aufzugsbänder bei geschlossenem Behang von außen nicht zu sehen sind, wenn die Lochungen und die Führungskörper der Behanglamellen näher zu der der Gebäudeinnenseite zugewandten Längskante angeordnet sind als zur nach außen gerichteten Längskante des Lamellenprofils. Es ergibt sich somit eine zusätzliche Einbruchssicherung. Außerdem müssen die Aufzugsbänder dann bei geschlossenem Behang nicht mehr zwischen den Behanglamellen hindurchgeführt werden, was bedeutet, dass die Behanglamellen nicht mehr die Aufzugsbänder einklemmen und dadurch im Lauf der Zeit abnützen und was ganz besonders vorteilhaft bedeutet, dass die Behanglamellen bei geschlossenem Behang direkt aneinander anliegen können, so dass sich eine zusätzlich verbesserte Abschattung ergibt.

Vorteilhaft für die Steifigkeit der Behanglamellen ist dabei, wenn die Lamellenprofile jeweils mindestens eine Randbördelung an einer ihrer Längsseiten aufweisen. Darüber hinaus kann an einer solchen Randbördelung auch das bzw. die Wendebänder befestigt werden, etwa über in die Randbördelung eingeschossene Wendebandhalter oder an der Randbördelung befestigte oder eingeschossene Klippselemente, an denen das zugeordnete Wendeband mit an dem Wendeband befestigten Gegenklippselementen eingeklippst werden kann. Um ein sicheres Schließen der Spalte zwischen den Behanglamellen im geschlossenen Behangzustand zu erreichen sind vorteilhaft an den im geschlossenen Behangzustand unteren Längskanten der Lamellenprofile jeweils eine Randbördelung vorgesehen, die dort zur nächstunteren Behanglamelle hin vorsteht (bei horizontaler Stellung der Behanglamellen also nach unten) und in der Verschattungsstellung an der nächstunteren Behanglamelle anliegt.

Eine besonders gefällige Optik des Behangs in der Beschattungsstellung ergibt sich dabei, wenn die Lamellenprofile der Behanglamellen jeweils zwei unter einem bevorzugt stumpfen Winkel über eine Mulde aneinander anschließende Profilschenkel aufweisen und die an der unteren Längsseite vorgesehene Randbördelung in der Verschattungsstellung bzw. geschlossenen Stellung des Behangs in der Mulde der nächstunteren Behanglamelle zu liegen kommt, wobei die Lochungen, sofern vorhanden, dann am kürzeren, vorzugsweise auf der dem Gebäudeinneren zugewandten Seite des Lamellenprofils angeordneten Profilschenkel ausgebildet sind.

Die Mulde bzw. Vertiefung kann dann den Überstand der unteren Randbördelung gegenüber dem längeren Profilschenkel bei in der Verschattungsstellung befindlichem Behang ausgleichen, so dass sich von außen die optische Anmutung einer geschlossenen Front bildet, ohne dass die Lamellen an ihren Randbördelungen über diese Front überstehen würden. Dazu ist der sich zwischen der Mulde und der in der Verschattungsstellung unteren Randbördelung erstreckende lange Profilschenkel der Lamellenprofile vorteilhaft gerade, wobei die Mulde bzw. die Mulden der einzelnen Behanglamellen ausgehend von der durch den geradlinigen langen Profilschenkel definierten Ebene eine Tiefe aufweist, die dem Überstand der in der Verschattungsstellung unteren Randbördelung über diese Ebene entspricht, so dass in der Verschattungsstellung die langen Profilschenkel der Behanglamellen eine senkrechte Ebene bilden. Der lange bzw. längere, untere Profilschenkel kann aus Fertigungsgründen auch leicht gekrümmt, aber immer noch nahezu geradlinig sein. Leicht gekrümmt heißt, dass der Krümmungsradius gegenüber der Lamellenbreite groß ist, beispielsweise 500 mm beträgt.

Es wäre jedoch ebenso denkbar, die langen Profilschenkel wellenförmig zu gestalten, so dass sich aufgrund der den Überstand der unteren Randbördelung ausgleichenden Mulde von außen die Optik einer geschlossenen Wellenfront ergibt.

Im Folgenden wird eine vorteilhafte Ausführungsform der Erfindung näher erläutert, die in den beiliegenden Zeichnungen dargestellt ist.

Es zeigen:
- Figur 1: in perspektivischer Teilansicht eine Führungsschiene mit einem abgelassenen Behang mit aufjalousierten Lamellen eines Raffstores gemäß einer vorteilhaften Ausführungsform der Erfindung;
- Figur 2: Einzelheit II in Figur 1;
- Figur 3: eine horizontale Teilschnittansicht durch eine Führungsschiene des in Figur 1 gezeigten Raffstores mit Blickrichtung nach unten;
- Figur 3a: eine der Figur 3 entsprechende Ansicht einer weiteren Ausführungsform eines erfindungsgemäßen Raffstores;
- Figur 4: eine perspektivische Teilansicht einer Endleiste des in Figur 1 gezeigten Raffstores;
- Figur 5: eine Seitenansicht eines Ausschnitts des Behangs des in Figur 1 gezeigten Raffstores in Verschattungsstellung;
- Figur 6: eine der Figur 5 entsprechende Ansicht bei in Belichtungsstellung befindlichem Behang;
- Figur 7: eine perspektivische Teilansicht einer Führungsschiene mit teilweise abgelassenem Behang des in Figur 1 gezeigten Raffstores;
- Figuren 8 und 9: den Figuren 5 und 6 entsprechende Ansichten eines Behangs gemäß einer alternativen Ausführungsform der Erfindung, bei dem als Windsicherung zusätzliche Stahlseile gespannt sind;
- Figur 10: eine schematische Vertikalschnittansicht durch den Behang und die Aufhängung desselben an der Wickelwelle Entlang Linie X in Fig. 1, welche durch ein Aufzugsband des Raffstores verläuft;
- Figur 11: eine vertikale Schnittansicht entlang Linie XI in Figur 1, welche durch ein Wendeband verläuft; und
- Figur 12: eine der Fig. 11 entsprechende Schnittansicht bei geschlossenem Behang.

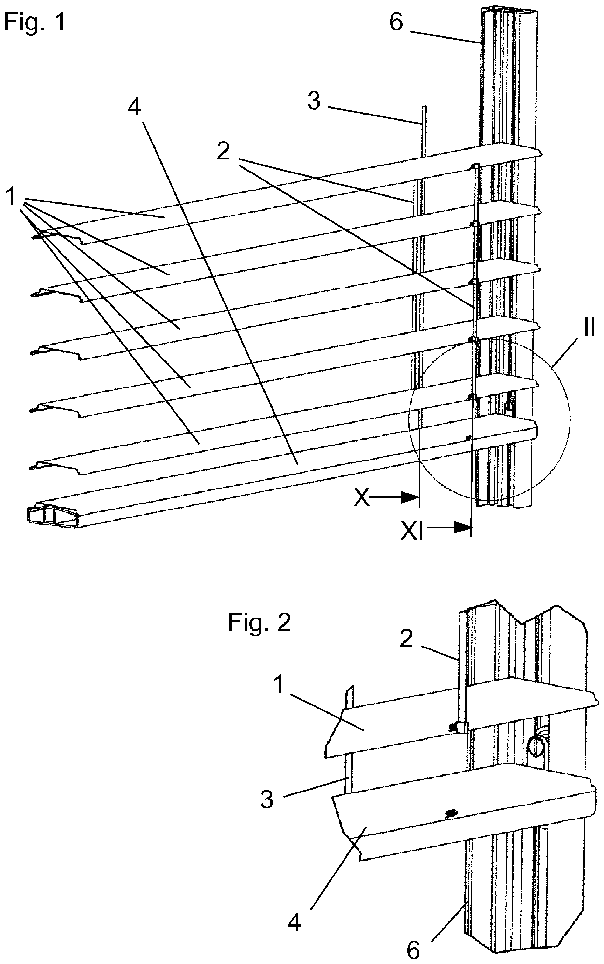

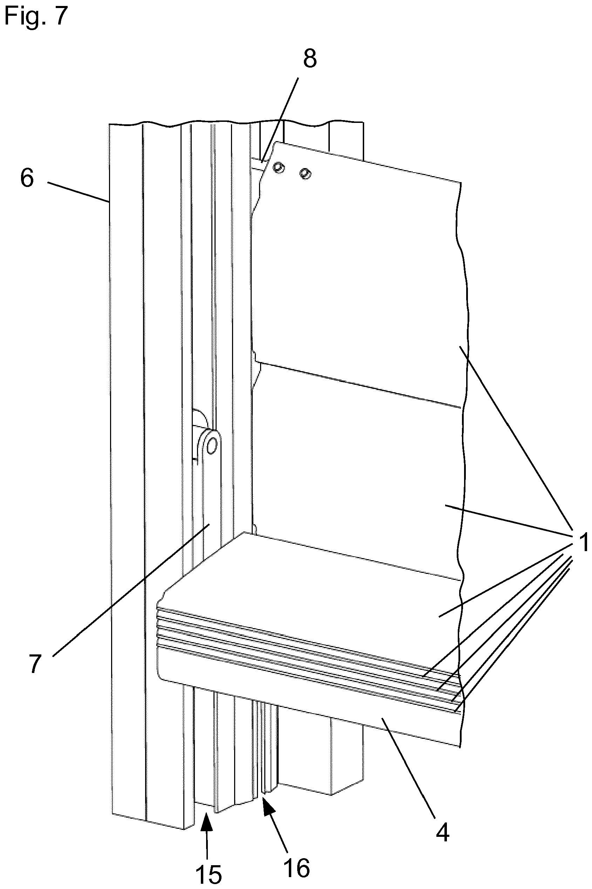

Zunächst wird Bezug genommen auf die Figur 1, welche einen Raffstorebehang zeigt, der aus Behanglamellen 1 und einer unteren Endleiste 4 besteht und zu seinen beiden Seiten jeweils in einer Führungsschiene 6 geführt ist, wobei der Figur 1 nur eine dieser beiden Führungsschienen 6 zu entnehmen ist. Wie insbesondere der Figur 2 zu entnehmen ist, die Einzelheit II in Figur 1 in vergrößerter Darstellung zeigt, sind dabei Aufzugsbänder 3 mit der unteren Endleiste 4 verbunden, über die die Endleiste 4 aufgezogen und abgelassen werden kann, welche dabei die Behanglamellen 1 mitnimmt, wie auch aus der Figur 7 hervorgeht, die den Behang in teilweise abgefahrener Stellung zeigt, wobei auf der Endleiste 5 Behanglamellen 1 aufliegen, und die oberen beiden Behanglamellen 1 sich in Verschattungsstellung befinden.

Wie man weiterhin aus der Zusammenschau der Figuren 1 und 2 erkennt, sind an den Seitenrändern der Behanglamellen 1 Wendebänder 2 befestigt, um die Behanglamellen 1 zwischen der in Figur 1 gezeigten Belichtungsstellung des Behangs und der in Figur 7 gezeigten Verschattungsstellung zu verschwenken. Dabei geht insbesondere aus Figur 2 hervor, dass die Wendebänder 2 nicht an der unteren Endleiste 4 befestigt sind, sondern lediglich an den Behanglamellen 1.

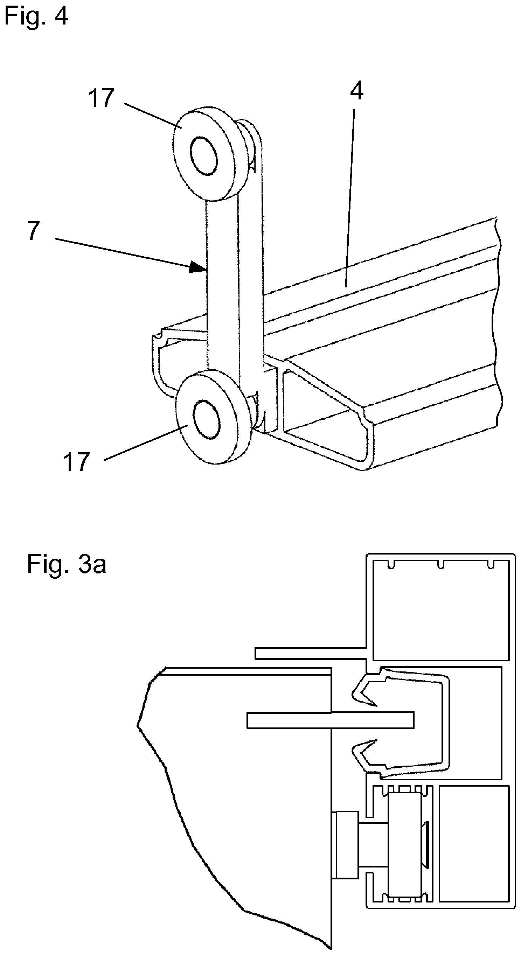

Denn bei der gezeigten Ausführungsform jalousiert die untere Endleiste 4 nicht, sondern soll auch beim Schließen des Behangs in ihrer horizontalen Lage verbleiben. Dazu weist die untere Endleiste an ihren beiden Schmalseiten jeweils einen besonders deutlich der Figur 4 zu entnehmenden Führungskörper 7 auf. Der Führungskörper 7 hat dabei einen L-förmigen Grundkörper, dessen einer Schenkel mit rechteckigem Querschnitt in eine entsprechende, rechteckige Kammer der Endleiste 4 eingesteckt ist und dessen anderer Schenkel sich in Führungsnutrichtung, im dargestellten Beispiel also in Vertikalrichtung erstreckt und zwei als Rollen ausgebildete Führungsköpfe 17 trägt. Die beiden Führungsköpfe 17 sind auf diese Weise in Führungsnutrichtung voneinander beabstandet.

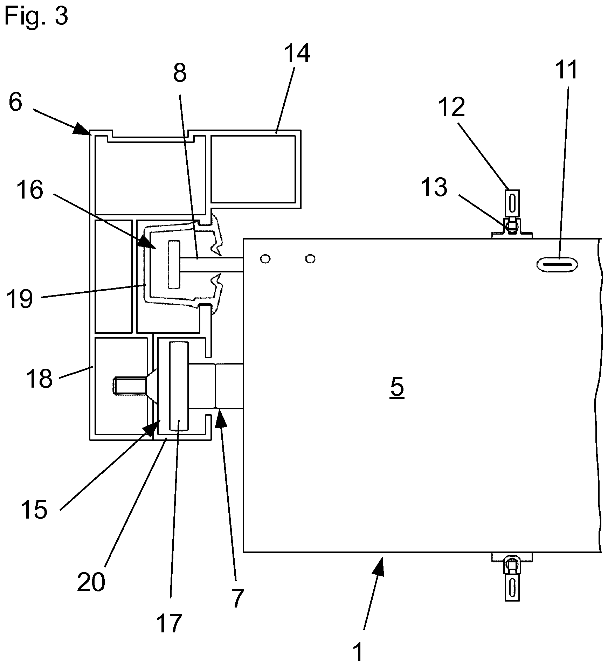

Wie Figur 3 zeigt, sind die beiden Führungsköpfe 17 dabei mit relativ geringem Spiel in einer der unteren Endleiste 4 zugeordneten Führungsnut 15 der Seitenführungsschiene 6 geführt und können aufgrund ihrer drehbaren Lagerung am Grundkörper des Führungskörpers 7 an den beiden Flanken der Führungsnut 15 abrollen. Dadurch wird gleichzeitig ein unerwünschter Versatz der Endleiste 4 in Querrichtung zum Behang, etwa durch Windlasten oder dergleichen, und auch ein unerwünschtes Verschwenken der Endleiste 4 wirkungsvoll verhindert. Dies ist besonders deshalb von Vorteil, weil die Aufzugsbänder 3 nicht an der gewichtsmäßigen Mittellinie der unteren Endleiste 4 und des gesamten zusammengezogenen Lamellenpakets an der unteren Endleiste 4 angreifen, sondern zur Gebäudeinnenseite hin versetzt. Durch die verschwenksichere Führung der Endleiste 4 in der Führungsschiene 6 wird trotzdem ein Kippen des Lamellenstapels während des Aufziehens (Anhebens)/Ablassens wirkungsvoll verhindert.

Wie der Figur 3 ebenso zu entnehmen ist, sind dabei die an der Endleiste 4 befestigten Führungskörper 7 und an den Behanglamellen 1 befestigte Führungskörper 8 in getrennten Führungsnuten 15, 16 geführt, wobei die den Führungskörpern 8 der Behanglamellen 1 zugeordnete Führungsnut 16 seitlich auf der dem Gebäudeinneren zugewandten Seite neben der dem an der Endleiste 4 befestigten Führungskörper 7 zugeordneten Führungsnut 15 angeordnet ist.

Die Führungsschiene 6 wird dabei von einem im Querschnitt in etwa L-förmigen Trägerkörper 18 und einem daran angeschraubten, die den Endleistenführungskörpern zugeordnete Führungsnut 15 bildenden Führungsnutprofil 20 gebildet. Das Führungsnutprofil 20 kann zum Einfädeln der rollenförmigen Führungsköpfe 17 in die Führungsnut 15 abgenommen werden. Die Führungsschiene 6 weist ferner eine dem Behang zugewandte Öffnung auf, in die ein die Führungsnut 16 für die Behanglamellenführungskörper 8 bildendes Kunststoffinlet 9 eingeklippst ist.

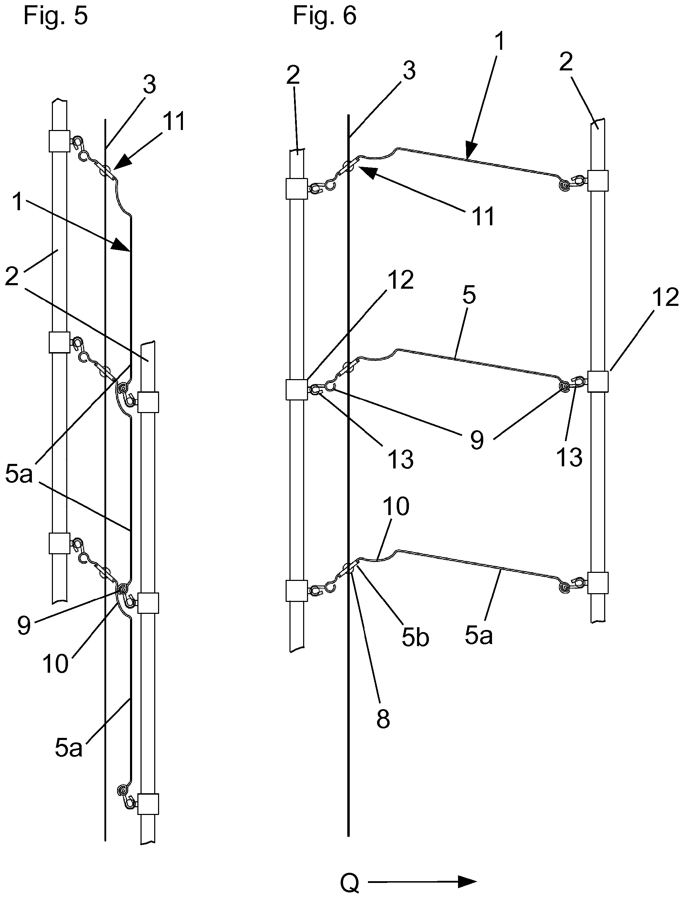

Auf der dem Gebäudeinneren zugewandten Seite der Führungsschiene 6 ragt dabei ein Schenkel 14 des L-förmigen Trägerprofils 18 in Richtung zur anderen Führungsschiene 6 hin, also in Lamellenlängsrichtung nach innen, um eine bessere Abdunklung an den Seitenkanten des Behangs dadurch zu ermöglichen, dass ein direkter Lichteinfall durch Spalt zwischen der Führungsschiene 6 und der der Führungsschiene 6 zugewandten Seite des Behangs unterbunden wird. Dadurch, dass die Schwenkachse der Behanglamellen 1 beim Jalousieren wie nachstehend noch unter Bezug auf die Figuren 5 und 6 erläutert, zum überstehenden Schenkel 14 hin verlegt wurde, wird zudem der verbleibende Durchtrittsspalt für diffuses Licht zwischen der dem Gebäudeinneren zugewandten Seite des Behangs und dem Schenkel 14 der Führungsschiene 6 verengt, so dass die an den Seiten des geschlossenen Behangs einfallende Lichtmenge weiter verringert wird.

In der Figur 3 sind dabei die Wende- und Aufzugsbänder weggelassen. Man erkennt jedoch eine Lochung bzw. Durchtrittsöffnung 11 für eines der Aufzugsbänder 3, welche sich nahe der inneren Längskante der Behanglamelle 1 auf der Schwenkachse der an der Behanglamelle 1 angebrachten Führungskörper 8 befindet. An den Längskanten der Behanglamellen 1, die wie die Figuren 5 und 6 zeigen, als Randbördelungen 9 ausgeführt sind, sind dabei Klippselemente 13 in die Randbördelungen 9 eingeschossen, in denen Gegenklippselemente 12 eingeklippst sind, die wiederum an den Wendebändern 2 befestigt sind.

Die Figuren 5 und 6 zeigen die Behanglamellen 1 des Behangs in Verschattungsstellung einerseits und in Belichtungsstellung andererseits. Die Behanglamellen weisen dabei jeweils ein Lamellenprofil 5 mit einem langen bzw. gegenüber dem kurzen Schenkel längeren Schenkel 5a auf, welche im stumpfen Winkel zueinander stehen und eine Vertiefung bzw. Mulde 10 von beiden Seiten einfassen. Dabei öffnet sich die Vertiefung 10 in der Belichtungsstellung (Fig. 6) nach oben, wohingegen das Lamellenprofil 5 insgesamt in der Belichtungsstellung nach unten hin konkav ist. Der kurze Schenkel 5b befindet sich dabei auf der dem Gebäudeinneren zugewandten Seite des Behangs und trägt zum einen die Lochungen 11 und zum anderen die Führungskörper 8, und zwar in einem direkt an die dortige Randbördelung 9 anschließenden Bereich.

Werden die Behanglamellen 1 aus der in Figur 6 gezeigten Belichtungsstellen in die in Figur 5 gezeigte Verschattungsstellung mittels Betätigung der Wendebänder 2 verschwenkt, so kann also die gesamte Länge des langen Schenkels 5a zuzüglich derjenigen der Mulde 10 zum Abschatten der Gebäudeöffnung eingesetzt werden, wohingegen der kurze Profilschenkel 5b die Durchlässe 11 für die Aufzugbänder 3 und die Führungskörper 8 trägt und mitsamt den Aufzugsbändern 3 im geschlossenen Zustand von außen her gesehen durch den geschlossenen Behang verdeckt wird. Dabei wird durch die Vertiefung 10 und die darin in der Verschattungstellung (Fig. 5) aufgenommene, untere Randbördelung 9 der nächstoberen Behanglamelle 1 auch dann der Durchtritt von direktem Licht verhindert und ein Sichtschutz insbesondere gegen von schräg unten kommende Blicke geschaffen, wenn die Behanglamellen 1 nicht vollständig schließen, also auch in der Verschattungsstellung ein kleiner Spalt zwischen einzelnen Behanglamellen 1 verbleibt. Denn die von schräg unten gesehen hinter der Sichtkante am Übergang vom langen Profilschenkel zur Vertiefung befindliche, untere Randbördelung 9 der nächstoberen Behanglamelle 1 steht dabei einem Licht- oder Blickeinfall von schräg unten im Weg.

Es ergibt sich also beim Blick von außen auf den geschlossenen Raffstore nicht nur das Bild einer optisch ansprechenden, glatten Front, sondern es wird auch erreicht, dass die Lochungen 11, durch die Licht ins Gebäudeinnere fallen könnte, verdeckt sind, so dass sich schon dadurch eine verbesserte Verschattung ergibt. Dieser Effekt wird noch dadurch gesteigert, dass die Lamellen 1 direkt aneinander anliegen können, ohne dass die Aufzugsbänder zwischen den Lamellen hindurch geführt werden müssten, was automatisch zu einem - wenn auch kleinen - Spalt führt.

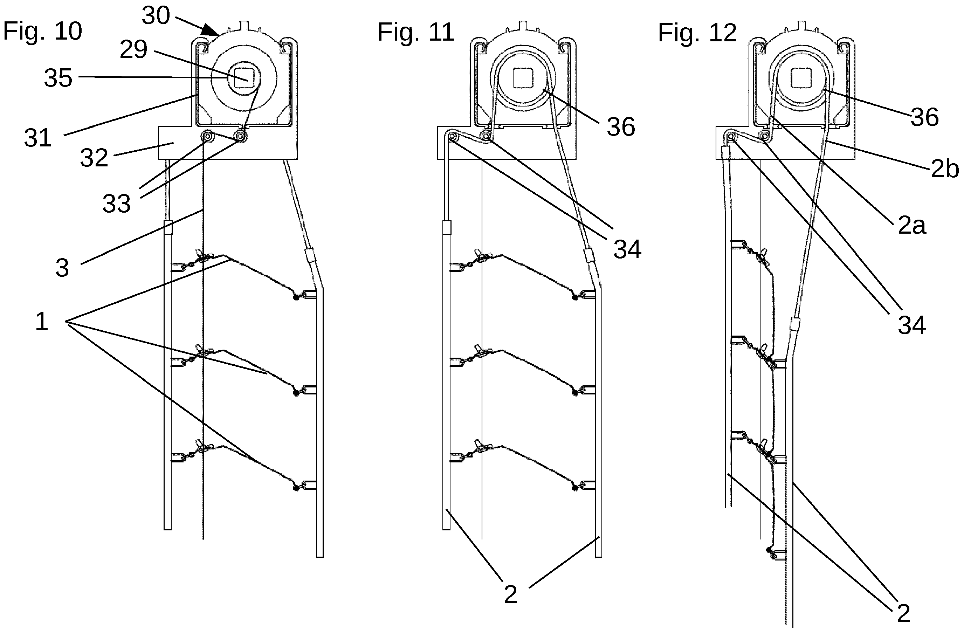

Wie der Figur 10 zu entnehmen ist, kann der Behang mittels gängiger Wendegetriebe 30 an der Wickelwelle 29 aufgehängt werden. Die Wendegetriebe 30 sind dabei in eine im Querschnitt in etwa U-förmige Kopfleiste 31 eingesetzt und weisen jeweils eine Haspel 35 auf, auf die das jeweilige Aufzugsband 3 auf- und abgewickelt wird, und mit welcher das jeweilige Wendegetriebe 29 auf die hier mit Vierkantquerschnitt ausgeführte Wickelwelle 29 aufgeschoben ist. Auf die Kopfleiste ist ein Adapter 32 aufgeklipst, welcher eine Umlenkung in Form von zwei Umlenkrollen 33 trägt, um das Aufzugsband 3 in die Ebene der Lochungen 11 zu lenken.

Wie man den Figuren 11 und 12 entnimmt, trägt der Adapter 32 ferner zwei Umlenkrollen 34, um das auf der dem Gebäudeinneren zugewandten Seite befindliche Wendeband 2 in die gewünschte senkrechte Ebene zu lenken. Die beiden Wendebänder 2 des gezeigten Wendegetriebes 30 sind dabei jeweils über einen Wendekordelstrang 2a, 2b an einem Wendekörper 36 angebunden, der über eine Rutschkupplung mit der Haspel 35 mitdrehend kuppelbar bzw. davon entkuppelbar ist, um die Behanglamellen 1 nach Erreichen der abgelassenen Position des Behangs zu verschwenken.

Vorteilhafte Abwandlungen und Modifikationen der gezeigten Ausführungsformen sind möglich, ohne den Rahmen der Erfindung zu verlassen.

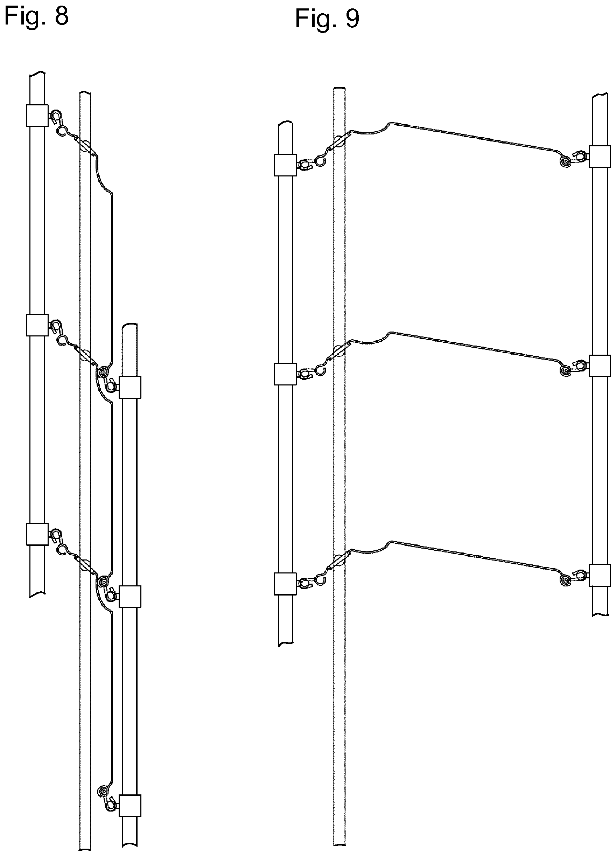

So könnten jetzt auch, wie die Figuren 8 und 9 zeigen, zusätzliche relativ dicke, dafür aber windstabile Stahlseile als Windsicherung gespannt werden, da sich die dafür notwendigen Durchtrittsöffnungen bei geschlosssenem Behang hinter der geschlossenenen Lamellenfront befinden und daher kein Licht durchlassen.

Es wäre jedoch ebenso denkbar, die Aufzugsbänder neben dem Behang zu führen, also nicht durch die Behanglamelle hindurch, die dann entsprechend auch nicht gelocht sein müssten, es sei denn für die Stahlseilwindsicherung.

## Patentansprüche

1. Raffstore mit einem an einer Anzahl Aufzugsbänder (3) aufzieh- und ablassbaren Behang aus Behanglamellen (1) und einer unteren Endleiste (4), wobei die Anzahl Aufzugsbänder (3) an der Endleiste (4) angreift, mit einer weiteren Anzahl an zumindest einer der beiden Längsseiten der Behanglamellen (1) angreifender Wendebänder (2), über die die Behanglamellen (1) zumindest bei abgelassenem Behang zwischen einer Belichtungsstellung mit voneinander abgehobenen Behanglamellen (1) und einer Verschattungsstellung mit aneinander anliegenden Behanglamellen (1) verschwenkbar sind, und mit jeweils einer Führungsschiene (6) zu beiden Seiten des Behangs, wobei an beiden Schmalseiten der Endleiste (4) und zumindest eines Teils der Behanglamellen (1) jeweils ein nach außen abstehender, in eine Führungsnut der zugeordneten Führungsschiene (6) hineinragender Führungskörper (7, 8) befestigt ist, um die Endleiste (4) und die Behanglamellen (1) zu führen, **dadurch gekennzeichnet, dass** die zu beiden Seiten des Behangs angeordneten Führungsschienen (6) mit einem auf der dem Gebäudeinneren zugewandten Seite der Behanglamellen (1) angeordneten Schenkel (14) in Lamellenlängsrichtung nach innen über die Schmalseiten der Behanglamellen (1) überstehen, wobei
die Behanglamellen (1) jeweils ein sich zwischen zwei in Lamellenquerrichtung (Q) beabstandeten, parallelen Längsseiten mit einer vorgegebenen Kontur erstreckendes Lamellenprofil (5) aufweisen, an dessen Schmalseiten die beiden Führungskörper (8) mit Bolzenabschnitten befestigt sind, deren Abstand in Lamellenquerrichtung (Q) zu der einen Längsseite der jeweiligen Behanglamelle (1) kleiner ist als zur anderen Längsseite, und wobei sich die Führungskörper (8) auf der dem L-Schenkel (14) zugewandten Seite der Behanglamelle (1) befinden.

2. Raffstore nach Anspruch 1, **dadurch gekennzeichnet, dass** der Abstand der Bolzenabschnitte zu der einen Längsseite der jeweiligen Behanglamelle (1) weniger als halb so groß ist als der Abstand zu der anderen Längsseite.

3. Raffstore nach Anspruch 2, **dadurch gekennzeichnet, dass** der Abstand der Bolzenabschnitte zu der einen Längsseite der jeweiligen Behanglamelle (1) weniger als als ein Fünftel so groß oder sogar weniger als ein Siebtel so groß ist als der Abstand zu der anderen Längsseite.

4. Raffstore nach Anspruch 1, 2 oer 3, **dadurch gekennzeichnet, dass** die Bolzenabschnitte benachbart zur angrenzenden Längsseite angeordnet sind.

5. Raffstore nach einem der vorhergehenden Ansprüche, **dadurch gekennzeichnet, dass** die Lamellenprofile (5) jeweils von einer als Durchgriff für die Anzahl Aufzugsbänder (3) dienenden Anzahl Lochungen (11) durchdrungen sind, wobei die Anzahl Aufzugsbänder (3) die Behanglamellen (1) an ihren Lochungen (11) durchgreift, und wobei die Lochungen (11) der Behanglamellen (1) auf einer gedachten, sich in Lamellenlängsrichtung durch die Bolzenabschnitte der beiden Führungskörper (8) verlaufenden Linie angeordnet sind.

6. Raffstore nach einem der Ansprüche 1 bis 4, **dadurch gekennzeichnet, dass** sich die Anzahl Aufzugsbänder (3) neben den Behanglamellen erstreckt, ohne die Behanglamellen zu durchgreifen.

7. Raffstore nach einem der vorhergehenden Ansprüche, **dadurch gekennzeichnet, dass** die Endleiste (4) in zumindest einer der beiden Führungsschienen (6) unverschwenkbar geführt ist.

8. Raffstore nach Anspruch 7, **dadurch gekennzeichnet, dass** der in dieser Führungsschiene (6) geführte Führungskörper (7) der Endleiste (4) einen in der zugeordneten Führungsnut aufgenommenen, in Führungsnutrichtung längserstreckten Führungskopf und/oder zumindest zwei in der zugeordneten Führungsnut (15) aufgenommene, in Führungsnutrichtung beabstandete Führungsköpfe (17) aufweist.

9. Raffstore nach Anspruch 7 oder 8, **dadurch gekennzeichnet, dass** die beiden Führungskörper (7) der Endleiste (4) jeweils die beiden in der zugeordneten Führungsnut (15) aufgenommenen, in Führungsnutrichtung beabstandeten Führungsköpfe (17) aufweisen, welche als drehbar an dem Führungskörper (7) aufgenommene Rollen ausgebildet sind, die in der zugeordneten Führungsnut (15) abrollen.

10. Raffstore nach einem der vorhergehenden Ansprüche, **dadurch gekennzeichnet, dass** die Führungsschienen (6) jeweils eine Führungsnut (15) für die Endleiste (4) einerseits und in Richtung quer zum Behang daneben eine andere Führungsnut (16) für die geführten Behanglamellen (1) andererseits aufweisen, so dass die Endleiste (4) einerseits und die geführten Behanglamellen (1) andererseits jeweils in eigenen Führungsnuten (15, 16) geführt sind.

11. Raffstore nach einem der vorhergehenden Ansprüche, **dadurch gekennzeichnet, dass** die Führungsschienen (6) jeweils ein gebäudebefestigbares Trägerprofil (18) und ein daran abnehmbar befestigtes Führungsnutprofil (20) mit der zur Führung der Endleiste (4) dienenden Führungsnut (15) aufweisen, wobei die zur Führung der Endleiste (4) dienenden Führungsnuten (15) jeweils eine dem Behang zugewandte, hinterschnittene Öffnung aufweisen, die von dem zugeordneten Führungskörper der Endleiste (4) durchgriffen wird, dessen in der Führungsnut (15) aufgenommener Teil hinter der hinterschnittenen Öffnung überkragt.

12. Raffstore nach einem der vorhergehenden Ansprüche, **dadurch gekennzeichnet, dass** die Lamellenprofile (5) der Behanglamellen (1) jeweils zwei unter einem bevorzugt stumpfen Winkel über eine Mulde (10) aneinander anschließende Profilschenkel (5a, 5b) aufweisen, und zumindest an den in der Verschattungsstellung unteren Längsseiten eine Randbördelung (9), wobei die Lochungen (11) am kürzeren Profilschenkel (5b) ausgebildet sind, welcher jeweils auf der dem Gebäudeinneren zugewandten Seite angeordnet ist und wobei die an der unteren Längsseite der Lamellenprofile (5) vorgesehene Randbördelung (9) in der Verschattungsstellung jeweils in der Mulde der nächstunteren Behanglamelle (1) zu liegen kommt.

13. Raffstore nach Anspruch 12, **dadurch gekennzeichnet, dass** die Behanglamellen (1) auch an den in der Verschattungsstellung oberen Längsseiten der Lamellenprofile (5) eine unmittelbar zu den Lochungen (11) benachbarte Randbördelung (9) aufweisen.

14. Raffstore nach Anspruch 12 oder 13, **dadurch gekennzeichnet, dass,** an der Randbördelung (9) Klipselemente (13) jeweils mit einer eingeschlossenen Klammer befestigt sind, welche Klipselemente (13) zur Befestigung von Gegenklipselementen (12) dienen, die wiederum an den Wendebändern (2) befestigt sind.

15. Raffstore nach einem der Ansprüche 12 bis 14, **dadurch gekennzeichnet, dass** der sich zwischen der Mulde (10) und der in der Verschattungsstellung unteren Randbördelung (9) erstreckende lange Profilschenkel (5a) der Behanglamellen (1) gerade oder nahezu gerade ist und die von der Mulde (10) ausgehenden, geradlinigen oder nahezu geradlinigen, langen Profilschenkel (5a) der Behanglamellen (1) eine senkrechte Ebene oder nahezu eine senkrechte Ebene bilden.

## Claims

1. Venetian blind comprising a blind consisting of blind slats (1) which is raisable and lowerable by means of a certain number of pull up cords (3), and a lower bottom rail (4), with the number of pull up cords (3) acting on said bottom rail (4), further comprising another certain number of reversal cords (2) acting on at least one of the two longitudinal sides of the curtain slats (1), by which the curtain slats (1), at least when the curtain is lowered, are tiltable between an opened position, where the curtain slats (1) are spaced from each other, and a closed position where the curtain slats (1) are in contact with each other, and further comprising a guide rail (6) each on either side of the curtain, with a guide element (7, 8) being attached to both narrow sides of the bottom rail (4) and at least part of the curtain slats (1) protruding to the outside, and extending into a guide groove of the associated guide rail (6) in order to guide the bottom rail (4) and the curtain slats (1), **characterized in that** the guide rails (6) arranged on either side of the curtain protrude, with a leg (14) arranged on the side of the curtain slats (1) facing the inside of the building, over the narrow sides of the curtain slats (1) in the direction of the slats towards the inside, with each of
the curtain slats (1) exhibiting a slats profile (5) extending between two parallel longitudinal sides with a defined outline spaced in the transverse direction (Q) of the slats, on which narrow sides of the slats profile (5) the two guiding elements (8) are attached by means of pin sections whose distance in the transverse direction of the slats (Q) to the one longitudinal side of the respective curtain slat (1) is smaller than the distance to the other longitudinal side, and with the guide elements (8) being located on the side of the curtain slat (1) facing the L-leg (14).

2. Venetian blind in accordance with claim 1, **characterized in that** the distance between the pin sections and the one longitudinal side of the respective curtain slat (1) is less than half the distance than the distance between said pin sections and the other longitudinal side.

3. Venetian blind in accordance with claim 2, **characterized in that** the distance between the pin sections and the one longitudinal side of the respective curtain slat (1) is less than one fifth as large or even less than one seventh as large than the distance to the other longitudinal side.

4. Venetian blind in accordance with claim 1, 2 or 3, **characterized in that** the pin sections are arranged adjacent to the bordering longitudinal side.

5. Venetian blind in accordance with any of the preceding claims, **characterized in that** each of the slat profiles (5) is perforated by a certain number of holes (11) serving as reach through holes for the number of pull up cords (3), with the number of pull up cords (3) reaching through the curtain slats (1) at their holes (11), and with the holes (11) of the curtain slats (1) being arranged along an imaginary line running through the pin sections of both guide elements (8) in the direction of the slats.

6. Venetian blind in accordance with any of the claims 1 to 4, **characterized in that** the number of pull up cords (3) extends beside the curtain slats without reaching through said curtain slats.

7. Venetian blind in accordance with any of the preceding claims, **characterized in that** the bottom rail (4) is guided in one of the two guide rails (6) and is not tiltable.

8. Venetian blind in accordance with claim 7, **characterized in that** the guide element (7) of the bottom rail (4) guided in said guide rail (6) comprises a guide head received in the associated guide groove extending in the direction of the guide groove, and/or comprises at least two guide heads (17) received in the associated guide groove (15) and spaced from one another in the direction of the guide groove.

9. Venetian blind in accordance with claim 7 or 8, **characterized in that** each of the two guide elements (7) of the bottom rail (4) comprises the two guide heads (17) received in the associated guide groove (15) and spaced in the direction of the guide groove, said guide heads (17) being designed as rollers rotatably received on the guide element (7) and rolling in the associated guide groove (15).

10. Venetian blind in accordance with any of the preceding claims, **characterized in that** each of the guide rails (6) comprises a guide groove (15) for the bottom rail (4) on one side and in the direction transverse to the curtain beside said guide groove (15) another guide groove (16) for the guided curtain slats (1) on the other side, so that the bottom rail (4) on one side and the guided curtain grooves (1) on the other side are guided in individual guide grooves (15, 16).

11. Venetian blind in accordance with any of the preceding claims, **characterized in that** each of the guide rails (6) comprises a carrier profile (18) attachable to the building and a guide groove profile (20), detachably fastened thereon, with a guide groove (15) for the purpose of guiding the bottom rail (4), with each of the guide grooves (15) serving to guide the bottom rail (4) comprising an undercut opening facing the curtain, which is reached through by the associated guide element of the bottom rail (4), with the section of the guide element received in the guide groove (15) projecting behind the undercut opening.

12. Venetian blind in accordance with any of the preceding claims, **characterized in that** the slat profiles (5) of the curtain slats (1) comprise two profile legs (5a, 5b) disposed adjacent to each other below a preferably obtuse angle over a hollow (10), and further a rim flange (9) at least on the bottom longitudinal sides in the closed position, with the holes (11) being designed on the short profile leg (5b) which is arranged each on the side facing the inside of the building, and with the rim flange (9) provided on the bottom longitudinal side of the slat profiles (5) lies in the hollow of the next lower curtain slat (1) in closed position.

13. Venetian blind in accordance with claim 12, **characterized in that** the curtain slats (1) possess a rim flange (9) directly adjacent to the holes (11) also on the upper longitudinal sides of the slat profiles (5) in closed position.

14. Venetian blind in accordance with claim 12 or 13, **characterized in that** clip elements (13) are attached to the rim flange (9) by means of an incorporated clip, such clip elements (13) serving to fasten counter clip elements (12) which in turn are attached to the reversal cords (2).

15. Venetian blind in accordance with any of the claims 12 to 14, **characterized in that** the long profile leg (5a) of the curtain slats (1) extending between the hollow (10) and the bottom rim flange (9) in closed position is straight or near straight, and the straight or near straight long profile legs (5a) of the curtain slats (1) starting from the hollow (10) form a vertical or near vertical plane.

## Revendications

1. Store à lamelles comprenant un tablier composé de lamelles de tablier (1) qui est apte à être relevé et abaissé sur un nombre de bandes de relevage (3), et une baguette d'extrémité (4) inférieure, le nombre de bandes de relevage (3) se prenant sur ladite baguette d'extrémité (4), avec un autre nombre de bandes d'inclinaison (2) qui se prennent sur au moins l'un des deux côtés longitudinaux des lamelles de tablier (1) et par le biais desquelles les lamelles de tablier (1), au moins lorsque le tablier est abaissé, sont aptes à pivoter entre une position de passage de lumière où les lamelles de tablier (1) sont espacées les unes des autres et une position d'ombrage où les lamelles de tablier (1) sont en appui les unes sur les autres, et avec respectivement un rail de guidage (6) de part et d'autre du tablier, dans lequel un corps de guidage (7, 8) qui fait saillie vers l'extérieur et avance dans une rainure de guidage du rail de guidage (6) associé est fixé sur les deux côtés étroits de la baguette d'extrémité (4) et au moins d'une partie des lamelles de tablier (1) afin de guider la baguette d'extrémité (4) et les lamelles de tablier (1), **caractérisé par le fait que** les rails de guidage (6) disposés de part et d'autre du tablier dépassent, par une branche (14) disposée sur le côté des lamelles de tablier (1) qui montre vers l'intérieur du bâtiment, les côtés étroits des lamelles de tablier (1) vers l'intérieur dans la direction longitudinale de lamelle, dans lequel
les lamelles de tablier (1) présentent chacune un profilé de lamelle (5) qui s'étend entre deux côtés longitudinaux parallèles espacés dans la direction transversale de lamelle (Q), avec un contour donné, et sur les côtés étroits duquel sont fixés les deux corps de guidage (8) ayant des portions de boulon dont la distance, dans la direction transversale de lamelle (Q), par rapport à l'un des côtés longitudinaux de la lamelle de tablier (1) respective est plus petite que par rapport à l'autre côté longitudinal, et dans lequel les corps de guidage (8) se trouvent du côté de la lamelle de tablier (1), qui montre vers la branche en L (14).

2. Store à lamelles selon la revendication 1, **caractérisé par le fait que** la distance des portions de boulon par rapport à l'un des côtés longitudinaux de la lamelle de tablier (1) respective fait moins de la moitié de la distance par rapport à l'autre côté longitudinal.

3. Store à lamelles selon la revendication 2, **caractérisé par le fait que** la distance des portions de boulon par rapport à l'un des côtés longitudinaux de la lamelle de tablier (1) respective fait moins d'un cinquième ou même moins d'un septième de la distance par rapport à l'autre côté longitudinal.

4. Store à lamelles selon la revendication 1, 2 ou 3, **caractérisé par le fait que** les portions de boulon sont disposées de manière à être voisines du côté longitudinal contigu.

5. Store à lamelles selon l'une quelconque des revendications précédentes, **caractérisé par le fait que** les profilés de lamelle (5) sont traversés chacun par un nombre de perforations (11) servant de passage au nombre de bandes de relevage (3), dans lequel le nombre de bandes de relevage (3) traverse les lamelles de tablier (1) sur leurs perforations (11), et dans lequel les perforations (11) des lamelles de tablier (1) sont disposées sur une ligne imaginaire s'étendant dans la direction longitudinale de lamelle à travers les portions de boulon des deux corps de guidage (8).

6. Store à lamelles selon l'une quelconque des revendications 1 à 4, **caractérisé par le fait que** le nombre de bandes de relevage (3) s'étend à côté des lamelles de tablier sans traverser les lamelles de tablier.

7. Store à lamelles selon l'une quelconque des revendications précédentes, **caractérisé par le fait que** la baguette d'extrémité (4) est guidée dans l'un au moins des deux rails de guidage (6) de manière à ne pas pouvoir pivoter.

8. Store à lamelles selon la revendication 7, **caractérisé par le fait que** le corps de guidage (7) de la baguette d'extrémité (4) qui est guidé dans ce rail de guidage (6) présente une tête de guidage reçue dans la rainure de guidage associée et s'étendant longitudinalement dans la direction de la rainure de guidage et/ou au moins deux têtes de guidage (17) reçues dans la rainure de guidage (15) associée et espacées dans la direction de la rainure de guidage.

9. Store à lamelles selon la revendication 7 ou 8, **caractérisé par le fait que** les deux corps de guidage (7) de la baguette d'extrémité (4) présentent chacun les deux têtes de guidage (17) qui sont reçues dans la rainure de guidage (15) associée et espacées dans la direction de la rainure de guidage et qui sont réalisées en tant que galets lesquels sont logés à rotation sur le corps de guidage (7) et roulent dans la rainure de guidage (15) associée.

10. Store à lamelles selon l'une quelconque des revendications précédentes, **caractérisé par le fait que** les rails de guidage (6) présentent chacun une rainure de guidage (15) pour la baguette d'extrémité (4) d'un côté et, à côté de celle-ci dans la direction transversale au tablier, une autre rainure de guidage (16) pour les lamelles guidées de tablier (1) de l'autre côté, de sorte que la baguette d'extrémité (4) d'un côté et les lamelles guidées de tablier (1) de l'autre côté sont guidées chacune dans des propres rainures de guidage (15, 16).

11. Store à lamelles selon l'une quelconque des revendications précédentes, **caractérisé par le fait que** les rails de guidage (6) présentent chacun un profilé support (18) apte à être fixé sur le bâtiment ainsi qu'un profilé à rainure de guidage (20) fixé de manière détachable sur celui-ci et ayant la rainure de guidage (15) servant à guider la baguette d'extrémité (4), dans lequel les rainures de guidage (15) servant à guider la baguette d'extrémité (4) présentent chacune une ouverture contre-dépouillée montrant vers le tablier qui est traversée par le corps de guidage associé de la baguette d'extrémité (4), dont la partie reçue dans la rainure de guidage (15) est en porte-à-faux derrière ladite ouverture contre-dépouillée.

12. Store à lamelles selon l'une quelconque des revendications précédentes, **caractérisé par le fait que** les profilés de lamelle (5) des lamelles de tablier (1) présentent chacun deux branches de profilé (5a, 5b) jointes l'une à l'autre via un creux (10) à un angle de préférence obtus ainsi qu'un rabattement de bord (9) au moins sur les côtés longitudinaux inférieurs dans la position d'ombrage, dans lequel les perforations (11) sont réalisées sur la branche de profilé (5b) plus courte qui est disposée respectivement sur le côté montrant vers l'intérieur du bâtiment, et dans lequel ledit rabattement de bord (9) prévu sur le côté longitudinal inférieur des profilés de lamelle (5) vient se situer, dans la position d'ombrage, respectivement dans ledit creux de la lamelle de tablier (1) immédiatement inférieure.

13. Store à lamelles selon la revendication 12, **caractérisé par le fait que** les lamelles de tablier (1) présentent un rabattement de bord (9) directement voisin des perforations (11) également sur les côtés longitudinaux supérieurs dans la position d'ombrage, des profilés de lamelles (5).

14. Store à lamelles selon la revendication 12 ou 13, **caractérisé par le fait que** des éléments de clipsage (13) ayant chacun une agrafe incluse sont fixés sur le rabattement de bord (9), lesquels éléments de clipsage (13) servent à fixer des contre-éléments de clipsage (12) qui, quant à eux, sont fixés sur les bandes d'inclinaison (2).

15. Store à lamelles selon l'une quelconque des revendication 12 à 14, **caractérisé par le fait que** la longue branche de profilé (5a) des lamelles de tablier (1) qui s'étend entre le creux (10) et le rabattement de bord (9) inférieur dans la position d'ombrage est droite ou à peu près droite et que les longues branches de profilé (5a) droites ou à peu près droites des lamelles de tablier (1), qui s'étendent à partir du creux (10), forment un plan vertical ou presque un plan vertical.
